(19) **Europäisches Patentamt / European Patent Office / Office européen des brevets**

(11) **EP 2 234 279 B1**

(12) **EUROPEAN PATENT SPECIFICATION**

(45) Date of publication and mention
of the grant of the patent:
**25.07.2012 Bulletin 2012/30**

(21) Application number: **09156015.1**

(22) Date of filing: **24.03.2009**

(51) Int Cl.:
**H04B 1/69** (2011.01)    **G06K 19/067** (2006.01)

(54) **Pulse control of radio transmission**

Impulssteuerung der Funkübertragung

Contrôle d'impulsions pour transmission radio

(84) Designated Contracting States:
**DE GB**

(43) Date of publication of application:
**29.09.2010 Bulletin 2010/39**

(73) Proprietor: **Nokia Corporation**
**02150 Espoo (FI)**

(72) Inventors:
• **Jantunen, Joni**
**00500, Helsinki (FI)**
• **Varteva, Jaakko**
**02880, Veikkola (FI)**
• **Pellissier, Michaël**
**38000, Grenoble (FR)**
• **Deparis, Nicolas**
**38000, Grenoble (FR)**

(74) Representative: **Lamberg, Samu Petteri**
**Espatent Oy**
**Kaivokatu 10 D**
**00100 Helsinki (FI)**

(56) References cited:
**JP-A- 2007 158 546**    **US-A1- 2005 175 068**
**US-A1- 2008 112 512**

• **JONI JANTUNEN; ANTTI LAPPETELAINEN; JARMO ARPONEN; AARNO PARSSINEN; MICHAEL PELISSIER; BERTRAND GOMEZ; JULIEN KEIGNART: "A New Symmetric Transceiver Architecture for Pulsed Short-Range Communication" GLOBAL TELECOMMUNICATIONS CONFERENCE, 2008. IEEE GLOBECOM 2008. IEEE, IEEE, PISCATAWAY, NJ, USA, 30 November 2008 (2008-11-30), pages 1-5, XP031370584 ISBN: 978-1-4244-2324-8**

**Description**

TECHNICAL FIELD

The present invention generally relates to pulse control of radio transmission. The invention relates particularly, though not exclusively, to spectral shaping of impulse ultra-wide band based radio frequency identification systems.

BACKGROUND ART

Short range communications, such as near field communication and radio frequency identity (RFID), have been developed to provide tags that can be remotely read over a distance of some meters. Such RFID tags are traditionally used in logistics. For instance, paper rolls of a paper mill have been equipped with RFID tags so that each roll is identifiable all the way from packing to consumption. In effect, the near field communication technologies provide a means to transfer information, such as, for example an identity code.

Recently, near field communication has been proposed also for data transfer with passive, non-electrified, memory units which may have substantial amounts of memory which hold music songs or other files of relatively large size (in the magnitude of megabytes).

Impulse ultra-wide band (I-UWB) is a technology that is based on sending simple radio impulses at a very high data rate. In I-UWB, a data symbol is represented by one or more radio symbols in subsequent radio frames i.e. which frames are in practice subsequent periods. At simplest, each frame is used to transmit a radio pulse as an indication of a data symbol "1" and not used to transmit a radio pulse as an indication of a data symbol "0". However, such a transmission scheme may suffer from a poor transmission spectrum envelope if the transmitted pulse sequence is not designed carefully.

Radio transmissions are regulated so that all transmissions have to fit into a regulatory power spectral density mask that may be simplified as a rectangle in a frequency domain representation of radio power. In the I-UWB, it is a common problem that when a pulse stream is radiated by an antenna, some spikes (with the period of pulse repetition frequency) in frequency domain may occur if the pulses are regularly spaced in time domain. This may exceed the mean or peak power mask allowed by regulation. Time hopping and amplitude or pulse-polarity coding have been used to cope with this issue.

Pseudo-randomized time-hopping sequences are used in some prior-known implementations to decrease the periodicity of transmitted I-UWB pulse stream and to reduce power spikes from a frequency spectrum presentation of antenna power. Time-hopping sequences are also used as a multiple-access method by using different time-hopping codes for different users. In time-hopping, pulses are timed to different parts of subsequent pulse repletion periods, which translates into a need of higher timing resolution. Hence, the communication based on pseudo-randomized time-hopping pulse streams requires relatively high frequency timing references, which unfortunately results in growing technical demands and more expensive construction. Moreover, time-hoping necessitates that the receiver and the transmitter are somehow made aware of a common time-hopping scheme and of the timing of operation within the time-hopping scheme.

Polarity coding of transmitted pulses is also known from I-UWB in general. In polarity coding, the pulses that are sent have polarities that are differentiated by 180 degrees in a pseudo-random manner. However, the polarity coding needs further equipment in the transmitter to control the phase of radio transmission in the desired manner. Such further equipment comes with a cost of added price and power consumption, both of which are particularly inconvenient in RFID applications.

JONI JANTUNEN; ANTTI LAPPETELAINEN; JARMO ARPONEN; AARNO PARSSINEN; MICHAEL PELISSIER; BERTRAND GOMEZ; JULIEN KEIGNART: "A New Symmetric Transceiver Architecture for Pulsed Short-Range Communication" GLOBAL TELECOMMUNICATIONS CONFERENCE, 2008. IEEE GLOBECOM 2008. IEEE, IEEE, PISCATAWAY, NJ, USA, 30 November 2008, pages 1-5, ISBN: 978-1-4244-2324-8 discloses an apparatus comprising:

•    a waveform generator configured to produce a radio frequency signal;

•    a pulse generator configured to shape the radio frequency signal into radio frequency pulses suitable for transmission in impulse ultra wideband radio communication;

•    wherein at least one of the waveform generator and the pulse generator is configured to randomize the phase of the radio frequency pulses.

US 2008/112512 A1, US 2005/175068 A1 and JP 2007 158546 A disclose UWB transmitters in which the phase of the pulses is randomized.

SUMMARY

According to a first exemplary aspect of the invention there is provided an apparatus comprising:

a waveform generator configured to produce a radio frequency signal;
a pulse generator configured to shape the radio frequency signal into radio frequency pulses that are suitable for transmission in impulse ultra-wide band radio communication;
an antenna configured to radiate the radio frequency pulses; wherein at least one of the waveform generator and the pulse generator is configured to randomize the phase of the radio frequency pulses and the waveform generator is further configured to receive noise signals from the antenna when started and to responsively establish random phase radio frequency pulses.

The different phases of the pulses may be freely selected without any discrete steps. Alternatively, the different phases may be selected with at least three different steps.

The apparatus may be configured to restart the waveform generator between shaping of subsequent pulses by the pulse generator. The apparatus may comprise for restarting the waveform generator a switch; a power ramp unit; or a gain controllable element with which the waveform generator may be started on beginning of the forming of a pulse by the pulse generator.

The waveform generator may comprise a super-regenerative oscillator.

The waveform generator and pulse generator may be configured to apply a time-hopping scheme such that pulses of adjacent frames may have different time offsets.

The waveform generator may further be configured to alternate the center frequency of the radio frequency signal. The alternating may comprise changes scaled to alternate the antenna radiated radio signals within the spectral density mask. Alternatively, the alternating may comprise changes scaled to cause frequency hopping between different frequency bands with a frequency change substantially larger than that covered by the spectral density mask.

The pulse generator may comprise a timing signal generator configured to produce a quench signal which controls the generation of pulses by activating and damping oscillations by the waveform generator.

The apparatus may further comprise a receiver configured to receive impulse ultra-wide band radio communication signals. The receiver may be configured to use the antenna and the waveform generator to demodulate radio signals received by the antenna. The receiver may further comprise a correlator circuitry configured to test presence of impulse ultra-wide band radio pulses at given periods of time. The receiver may further be configured to use the timing signal generator to control the correlator circuitry.

According to a second exemplary aspect of the invention there is provided a method comprising:

producing a radio frequency signal by a waveform generator;
shaping by a pulse generator the radio frequency signal into radio frequency pulses suitable for transmission in impulse ultra-wide band radio communication;
radiating the radio frequency pulses by an antenna;
randomizing the phase of the radio frequency pulses by at least one of the waveform generator and the pulse generator and receiving by the waveform generator noise signals from the antenna when started and responsively establishing random phase radio frequency pulses.

Different non-binding exemplary aspects and embodiments of the present invention have been illustrated in the foregoing. The above embodiments are used merely to explain selected aspects or steps that may be utilized in implementations of the present invention. Some embodiments may be presented only with reference to certain exemplary aspects of the invention. It should be appreciated that corresponding embodiments may apply to other exemplary aspects as well.

BRIEF DESCRIPTION OF THE DRAWINGS

The invention will be described, by way of example only, with reference to the accompanying drawings, in which:

Fig. 1    shows a schematic drawing of a system according to an embodiment of the invention, and
Fig. 2    shows a schematic drawing of radio pulses produced according to an embodiment of the invention;
Fig. 3    shows a schematic drawing of radio pulses produced according to another embodiment of the invention;
Fig. 4    shows a schematic drawing of radio pulses produced according to an embodiment of the invention;
Fig. 5    illustrates effective radiated spectrum of a pulse stream without and with random phase smoothing effect together with a regulation mask.

DETAILED DESCRIPTION

In the following description, like numbers denote like elements.

While the invention has been described below in terms of a multitude of example embodiments, various changes can be made therein without departing from the spirit and scope of the invention, as described in the appended claims.

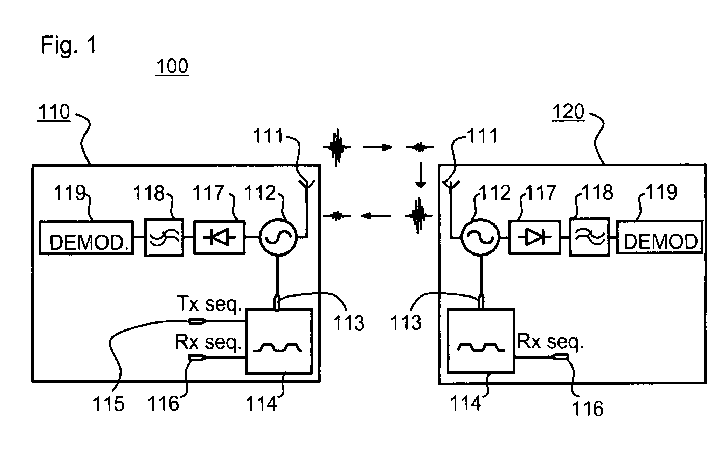

Fig. 1 shows a schematic drawing of a system 100 according to an embodiment of the invention. The system comprises an impulse ultra-wide band (I-UWB) transmitter unit 110 that in this embodiment is a transceiver i.e. that is also capable of receiving information. The transmitter unit 110 comprises an antenna 111 and an oscillator 112 connected to the antenna, the oscillator comprising a pulse control input 113 connected to a quench signal source 114. The quench signal source 114 comprises a transmission activation signal input 115 and a reception activation signal input 116. The system 100 further comprises in a series a radio frequency (RF) detector 117, a low pass filter 118 and a demodulator 119. The RF detector 117 is connected to the oscillator 112.

The quench signal source 114 may be configured to operate as a pulse generator that has a transmission sequence input 115 and a reception sequence input 116. The sequence input 115 and/or the reception sequence input 116 may be configured to receive suitably formed sequences such as pulse width modulated digital signals to indicate desired transmission and/or reception periods during which the oscillator 112 should be activated. The quench signal source 114 is configured to produce quench signals according to received inputs 115 and 116 and to provide the quench signals to the pulse control input 113.

The system 100 may be constructed to form a super-regenerative detector in which the oscillator 112 is automatically switched between an oscillating and a non-oscillating condition according to a quench signal. When a quench signal starts the oscillator 112, oscillation builds up in the detector during a positive excursion or maximum of each cycle of the quench and extinguishes during a negative excursion or minimum voltage in the quench signal.

As no other signal is applied to the oscillator 112, oscillation builds up during each positive portion of a quench voltage cycle starting from an initial amplitude determined by the thermal noise present at the input of the oscillator and reaches a final value corresponding to the equilibrium value for the oscillator. The oscillation then fades away during the negative or low portion of the quench voltage cycle.

The system may be usable in radio frequency identity applications in which a receiver device is electrified by the radio transmission.

The system may be designed so that the oscillator 112 does not operate as an injection locked oscillator. The oscillator system may act as a UWB transmitter even without external stimuli that is used in some prior known UWB transmitters.

In some prior known UWB transmitters, an injection locked oscillator without external stimuli is efficiently used as an emitter because there is no need for up-converter mixers and high isolation stages. Such an architecture may be particularly well-suited to low power application. The external stimulus may come from the nth harmonics created by the quench signal that switch on and off the system. In order to relax synchronization or to use this technique in radar applications, the signal generated by the oscillator is locked onto the phase of the injected signal. In theory, a free running source that oscillates at fo with power Pose and quality factor $Q_0$ can be synchronized by an external source at $f_{inj}$ with power $P_{inj}$ if the frequency difference $\Delta f$ fulfils the following condition:

$$\Delta f \le \frac{f_0}{Q_0}\sqrt{\frac{P_{osc}}{P_{inj}}} \qquad\qquad (1)$$

Although in prior art systems phase coherence has been produced, the system of Fig. 1 is designed to operate quite differently. In system 1, the injected quench signal is designed to <u>not</u> fulfill equation (1). Hence, the oscillator 112 is configured to operate in a free running mode without any locked signal. The quench signal source may be configured to produce trapezoidal waveform (or e.g. duty cycled signal optimized waveform) in order to limit energy at the central frequency $f_0$ so as to avoid phase-locking of the oscillator 112 with the quench signal. When the quench signal starts the oscillator 112, the oscillator starts oscillating from radio noise received from the antenna. Hence, pulse signals generated by the oscillator 112 on timing defined by the quench signal have random initial phase. The result is that the radio spectrum of periodically transmitted pulses is smoothed. The smoothing is very efficient, since not only is the polarity of the pulses inverted between different pulses as in polarity coding, but better still, the polarity may be alternated without discrete steps. The produced randomness of the phase of the pulses produced by the oscillator 112 makes it possible to eliminate or at least reduce spikes in the spectrum of a regular pulse stream. As a consequence, the radio spectrum may fulfill regulation mask without using any complex time hopping or polarity coding which require separate circuitry and thus add complexity and power consumption.

It is seen that the antenna 111 may effectively operate as a randomizer that produces a random signal as a phase control signal. The oscillator 112 in itself may be seen as waveform generator configured to produce a radio frequency signal and as a phase controller without need for further circuitry. Moreover, a common oscillator 112 may be used both in transmission and reception. For receiving I-UWB signals, the oscillator 112 is periodically started according to a reception sequence signal fed into the reception signal input 116. If a pulse is received at the same time with the oscillation of the oscillator 112, the oscillator boosts the gain of the potentially weak pulse so that the RF detector 117, low pass filter 118 and demodulator 119 can detect a corresponding radio symbol and thus a train of amplitude modulated ones and zeroes may be received as known in the art of I-UWB.

The system 100 may comprise a switch to start the oscillator 112 on beginning of the forming of a pulse. This function may be provided by the quench signal source 114 or a dedicated switch may be provided.

The switching of the oscillator 112 may serve multiple purposes. First, by repeatedly restarting the oscillator 112, subsequent pulses may be configured to have randomly differing phases. Second, power draw of the oscillator can be stopped so as to reduce power consumption. Third, if a dedicated switch is used, the dedicated switch may be used to also generate noise that sets a random phase to the oscillator 112. Namely, existing switches produce an amount of noise on switching on and off and this noise may be used by the oscillator 112 as noise injection that defines the phase of the oscillator. Alternatively, another switch or noise source of an apparatus that comprises the system 100 may be used to inject noise to the oscillator 112 on starting of the oscillator. If a noise source other than the antenna 111 is used to inject noise to the oscillator 112, a directional element or a controllable isolator may be arranged between the antenna 111 and the oscillator 112 so as to emphasize the effect of the noise source.

The system 100 may comprise a timing circuitry configured to provide a transmission sequence such that the system 100 applies a time hopping scheme by timing subsequent pulses with varying intervals or different time offsets within subsequent timing frames.

The oscillator 112 may also be configured to alternate the frequency of the pulses in a predetermined manner. The alternating may be configured to alternate the frequency of the pulses so as to smooth the spectral density mask of resulting radio signals, while the alternations are yet small enough to enable reception without need to perform corresponding frequency adaptation. The alternating may comprise larger changes so that the alternating in effect causes frequency hopping according to a predetermined frequency hopping scheme. Frequency hopping as such is well-known from different radio communication technologies such as the Bluetooth and frequency hopping may help to further reduce interference with neighboring radio systems.

The system 100 presented in Fig. 1 may be used, for instance, in low-power applications such as the RFID. The system 100 does not necessarily require any changes to existing receivers. The system 100 may be constructed without particular circuitry for varying the phase of transmitted signals and in result the system 100 may be simpler and more cost-efficient to realize than e.g. known pseudo-random pulse polarity coding methods. The system may be particularly well-suited to high-data rate applications, in which it may be difficult to reach desired combination of sufficient range and data rate without excessive radio interference.

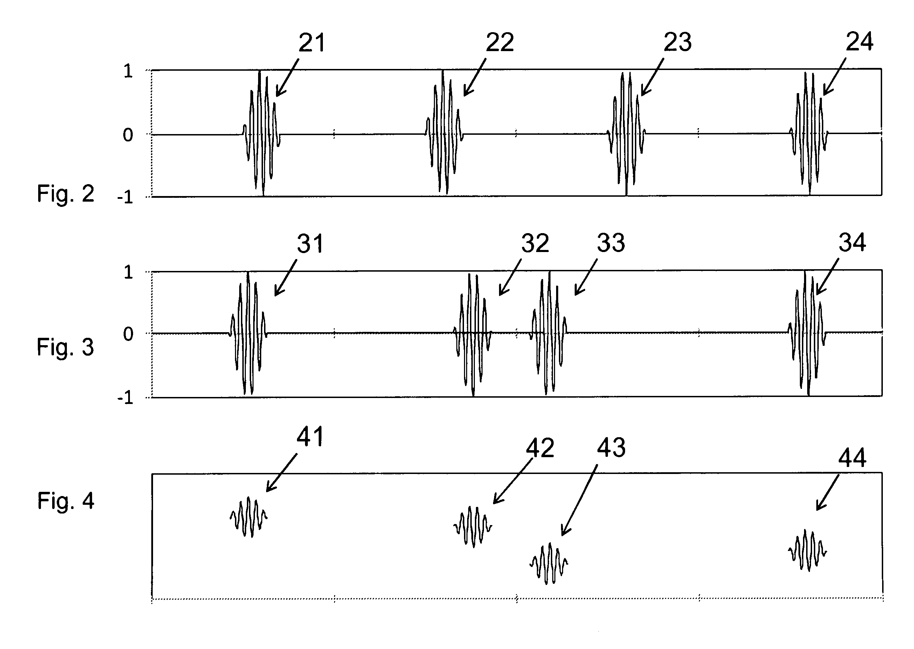

Fig. 2 shows a schematic drawing of radio pulses 21 to 24 produced according to an embodiment of the invention. Fig. 2 shows four periodically sent pulses with random phase. As is seen from Fig. 2, each pulse conforms to a desired pulse shape (which is here Gaussian but can be of any other shape). Desired pulse envelop of sinusoidal oscillation may be controlled by the quench signal which may also, in addition to activation and damping of the oscillation, control the shape of rising and falling slopes of the oscillation.

Fig. 3 shows a schematic drawing of radio pulses 31 to 34 produced according to another embodiment of the invention. The radio pulses in Fig. 3 have varying time offsets within each frame and varying phases. Hence, pulse spectrum is smoothed both by the differing phases and by the differing timing of the pulses.

Fig. 4 shows a schematic drawing of radio pulses 41 to 44 produced according to an embodiment of the invention. The pulses in Fig. 4 have varying phase, time hop and center frequencies. In Fig. 4 y-axis presents frequency domain i.e. the consecutive pulses are transmitted on different center frequencies. The scale on the y-axis is drawn without true scale for better illustration so that pulses of different center frequencies can be seen together. The center frequencies of pulses may be defined by a pseudo-random pattern. This drawing illustrates how spectral smoothing of the pulses may be carried out by variations in each of timing, frequency and phase of the pulses. It is appreciated that the scale of the alterations may be varied according to particular circumstances. Moreover, it is understood that none of the Figs. 2 to 4 is presented in natural scale; but rather the pulses are presented suitably for illustration.

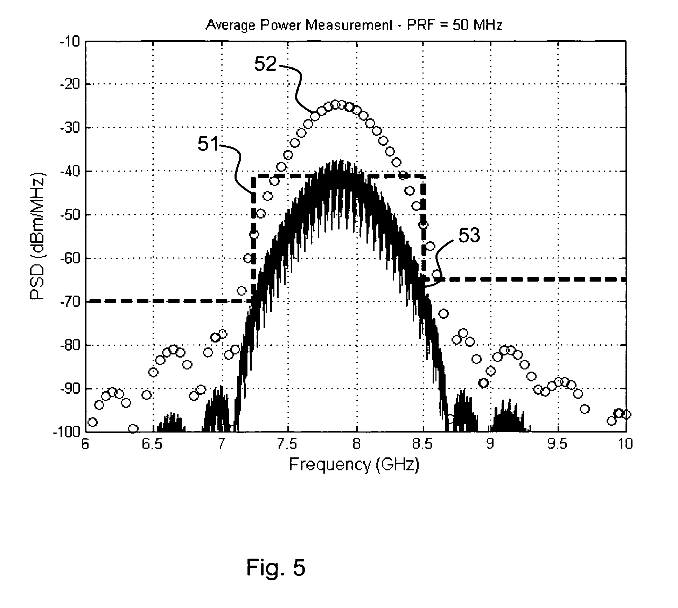

Fig. 5 illustrates effective radiated spectrum of a pulse stream without and with random phase smoothing effect together with a regulation mask 51.

A first curve 52 shows the effective radiated spectrum of the pulse stream without random phase smoothing effect. A second curve 53 shows the effective radiated spectrum of the pulse stream of the first curve with random phase smoothing effect. It is appreciated that the use of the random phase smoothing as in the second curve may help to decrease peak values of the spectrum to comply with the regulation mask 51 while achieving desired data rate and radio transmission power.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

**Claims**

1. An apparatus comprising:

    a waveform generator configured to produce a radio frequency signal;
    a pulse generator configured to shape the radio frequency signal into radio frequency pulses suitable for transmission in impulse ultra-wide band radio communication;
    an antenna for radiating the radio frequency pulses;
    wherein at least one of the waveform generator and the pulse generator is configured to randomize the phase of the radio frequency pulses and the waveform generator is further configured to receive noise signals from the antenna when started and to responsively establish random phase radio frequency pulses.

2. An apparatus according to claim 1, wherein the apparatus is configured to restart the waveform generator between shaping of subsequent pulses by the pulse generator.

3. An apparatus according to any claim 1 or 2, wherein the waveform generator comprises a super-regenerative oscillator.

4. An apparatus according to any one of the preceding claims, wherein the waveform generator and pulse generator are configured to apply a time-hopping scheme such that pulses of adjacent frames have different time offsets.

5. An apparatus according to any one of the preceding claims, wherein the waveform generator is further configured to alternate the frequency of the radio frequency signal.

6. An apparatus according to any one of the preceding claims, wherein the apparatus further comprises a receiver configured to receive impulse ultra-wide band radio communication signals.

7. An apparatus according to claim 6, wherein the receiver is configured to receive radio signals from the antenna and to use the waveform generator to demodulate the received radio signals.

8. An apparatus according to claim 6 or 7, wherein the receiver further comprises a correlator circuitry configured to test presence of impulse ultra-wide band radio pulses at given periods of time.

9. An apparatus according to any one of claims 6 to 8, wherein the receiver is further configured to use the timing signal generator to control the correlator circuitry.

10. A method comprising:

    producing a radio frequency signal by a waveform generator;
    shaping by a pulse generator the radio frequency signal into radio frequency pulses suitable for transmission in impulse ultra-wide band radio communication;
    radiating the radio frequency pulses by an antenna;
    randomizing the phase of the radio frequency pulses by at least one of the waveform generator and the pulse generator and receiving by the waveform generator noise signals from the antenna when started and responsively establishing random phase radio frequency pulses.

**Patentansprüche**

1. Gerät, umfassend:

   einen Wellenform-Generator, der eingerichtet ist, ein Funkfrequenzsignal zu erzeugen;
   einen Impuls-Generator, der eingerichtet ist, das Funkfrequenzsignal zu Funkfrequenzimpulsen zu formen, die zur Übertragung in Impuls-Ultrabreitband-Funkkommunikation geeignet sind,
   eine Antenne, um die Funkfrequenzimpulse abzustrahlen,
   wobei der Wellenform-Generator und/oder der Impuls-Generator eingerichtet ist/sind,
   die Phase der Funkfrequenzimpulse zu randomisieren, und der Wellenform-Generator weiter eingerichtet ist, Rauschsignale von der Antenne zu empfangen, wenn er gestartet wird, und um in Reaktion darauf Funkfrequenzimpulse mit zufälliger Phase zu bilden.

2. Gerät gemäß Anspruch 1, wobei das Gerät eingerichtet ist, den Wellenform-Generator zwischen dem Formen aufeinander folgender Impulse durch den Impuls-Generator neu zu starten.

3. Gerät gemäß Anspruch 1 oder 2, wobei der Wellenform-Generator einen superregenerativen Oszillator umfasst.

4. Gerät gemäß einem der vorstehenden Ansprüche, wobei der Wellenform-Generator und der Impuls-Generator eingerichtet sind, ein Zeitsprung-Schema anzuwenden, sodass die Pulse von benachbarten Rahmen verschiedene Zeitversatzwerte aufweisen.

5. Gerät gemäß einem der vorstehenden Ansprüche, wobei der Wellenform-Generator weiter eingerichtet ist, die Frequenz des Funkfrequenzsignals abzuwechseln.

6. Gerät gemäß einem der vorstehenden Ansprüche, wobei das Gerät weiter einen Empfänger umfasst, der eingerichtet ist, Signale von Impuls-Ultrabreitband-Funkkommunikation zu empfangen.

7. Gerät gemäß Anspruch 6, wobei der Empfänger eingerichtet ist, um Funksignale von der Antenne zu empfangen und um den Wellenform-Generator zu verwenden, um die empfangenen Funksignale zu demodulieren.

8. Gerät gemäß Anspruch 6 oder 7, wobei der Empfänger weiter eine Korrelatorschaltung umfasst, die eingerichtet ist, zu gegebenen Zeitspannen das Vorhandensein von Impuls-Ultrabreitband-Funkimpulsen zu prüfen.

9. Gerät gemäß einem der Ansprüche 6 bis 8, wobei der Empfänger weiter eingerichtet ist, den Timing-Signalgenerator zu verwenden, um die Korrelatorschaltung zu steuern.

10. Verfahren, umfassend:

    Erzeugen eines Funkfrequenzsignals mit einem Wellenform-Generator,
    Formen des Funkfrequenzsignals durch einen Impuls-Generator zu Funkfrequenzimpulsen, die zur Übertragung in Impuls-Ultrabreitband-Funkkommunikation geeignet sind,
    Abstrahlen der Funkfrequenzimpulse durch eine Antenne,
    Randomisieren der Phase der Funkfrequenzimpulse durch den Wellenform-Generator und/oder durch den Impuls-Generator, und
    Empfangen von Rauschsignalen durch den Wellenform-Generator von der Antenne,
    wenn dieser gestartet wird, und in Reaktion darauf
    Bilden von Funkfrequenzimpulsen mit zufälliger Phase.

**Revendications**

1. Dispositif comprenant :

   un générateur à formant configuré de manière à générer un signal radioélectrique ;
   un générateur d'impulsions configuré de manière à mettre en forme le signal radioélectrique en impulsions radioélectriques appropriées en vue d'une transmission dans une communication radio à bande ultra large par impulsions ;

une antenne destinée à rayonner les impulsions radioélectriques ;

dans lequel, au moins l'un parmi le générateur à formant et le générateur d'impulsions est configuré de manière à répartir au hasard la phase des impulsions radioélectriques, et le générateur à formant est en outre configuré de manière à recevoir des signaux de bruit en provenance de l'antenne lors du démarrage, et à établir en réaction des impulsions radioélectriques à phase aléatoire.

2. Dispositif selon la revendication 1, dans lequel le dispositif est configuré de manière à redémarrer le générateur à formant entre le façonnage d'impulsions subséquentes par le générateur d'impulsions.

3. Dispositif selon la revendication 1 ou 2, dans lequel le générateur à formant comprend un oscillateur à superréaction.

4. Dispositif selon l'une quelconque des revendications précédentes, dans lequel le générateur à formant et le générateur d'impulsions sont configurés de manière à appliquer un schéma de sauts temporels, de sorte que des impulsions de trames adjacentes présentent des décalages temporels différents.

5. Dispositif selon l'une quelconque des revendications précédentes, dans lequel le générateur à formant est en outre configuré de manière à alterner la fréquence du signal radioélectrique.

6. Dispositif selon l'une quelconque des revendications précédentes, dans lequel le dispositif comprend en outre un récepteur configuré de manière à recevoir des signaux de communication radio à bande ultra large par impulsions.

7. Dispositif selon la revendication 6, dans lequel le récepteur est configuré de manière à recevoir des signaux radio en provenance de l'antenne et à utiliser le générateur à formant pour démoduler les signaux radio reçus.

8. Dispositif selon la revendication 6 ou 7, dans lequel le récepteur comprend en outre un montage de circuits de corrélation configuré de manière à tester la présence d'impulsions radio à bande ultra large par impulsions à des périodes de temps données.

9. Dispositif selon l'une quelconque des revendications 6 à 8, dans lequel le récepteur est en outre configuré de manière à utiliser le générateur de signaux de temporisation en vue de commander le montage de circuits de corrélation.

10. Procédé comprenant les étapes ci-dessous consistant à :

générer un signal radioélectrique par le biais d'un générateur à formant ;

mettre en forme, par le biais d'un générateur d'impulsions, le signal radioélectrique en impulsions radioélectriques appropriées en vue d'une transmission dans une communication radio à bande ultra large par impulsions ;

rayonner les impulsions radioélectriques par le biais d'une antenne ;

répartir au hasard la phase des impulsions radioélectriques par le biais d'au moins l'un parmi le générateur à formant et le générateur d'impulsions, et recevoir, par le biais du générateur à formant, des signaux de bruit en provenance de l'antenne lors du démarrage, et établir en réaction des impulsions radioélectriques à phase aléatoire.

Fig. 1

100

110

120

111

111

119  118  117  112

112  117  118  119

DEMOD.

DEMOD

Tx seq.

113

113

Rx seq.

Rx seq.

115  116

114

114

116

EP 2 234 279 B1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008112512 A1
- US 2005175068 A1

- JP 2007158546 A

**Non-patent literature cited in the description**

- **JONI JANTUNEN ; ANTTI LAPPETELAINEN ; JARMO ARPONEN ; AARNO PARSSINEN ; MICHAEL PELISSIER ; BERTRAND GOMEZ ; JULIEN KEIGNART.** A New Symmetric Transceiver Architecture for Pulsed Short-Range Communication. *GLOBAL TELECOMMUNICATIONS CONFERENCE, 2008. IEEE GLOBECOM 2008. IEEE,* 30 November 2008, ISBN 978-1-4244-2324-8, 1-5